# EUROPEAN PATENT APPLICATION

(11) **EP 1 972 985 A1**
(43) Date of publication of application: **24.09.2008**
(21) Application number: 08153022.2
(22) Date of filing: 19.03.2008
(51) Int. Cl.: G02C 5/22

(54) **Elastic and adjustable hinge for spectacles**

(30) Priority: 22.03.2007 IT UD20070059
(71) Applicant: Visottica Industrie S.p.A. con unico socio, 31058 Susegana (TV) (IT)
(72) Inventor: Montalban, Rinaldo, 30100, Venezia (IT)
(74) Representative: Petraz, Gilberto Luigi

(57) **Abstract**

An elastic and adjustable hinge (10) for spectacles able to hinge a temple (22) to the front (19) of the spectacles comprises a first hinging element (12) inserted in a second hinging element (14) and pivoted thereto by means of a single pivoting element (16) and elastic means (24) mounted on the first hinging element (12) or on the second hinging element (14) which renders the movement of the temple (22) elastic with respect to the frame of the spectacles. The hinge (10) also comprises adjustment means to adjust the position of the temple (22) with respect to the position of the front (19), which comprises at least a hollow (26) made continuous on the whole external surface of the first hinging element (12), in order to determine a predefined reduction of the first hinging element (12).

## Description

### FIELD OF THE INVENTION

The present invention concerns an elastic hinge for spectacles comprising a hinging element, able to be attached to the lug of the spectacles and to be hinged to another hinging element on which a temple of the spectacles is mounted. In particular, the hinge allows to personalize the conditions of putting on and wearing the spectacles and allows the selective adjustment or regulation of the temple with respect to the front or lug of the spectacles.

### BACKGROUND OF THE INVENTION

Elastic hinges for spectacles are known, which articulate with respect to each other a temple and a lug, or front, of a frame, and which generally consist of two hinging elements pivoted to each other and mounted, respectively, one on the lug and one on the temple.

In particular, elastic hinges are known in which the hinging element mounted on the temple constitutes the elastic slider of the hinge and consists of a pivoting portion, for hinging with the hinging element mounted on the lug, and a sliding portion guided inside a housing of a box-like body, fixed to or integrated with the temple. The sliding portion has a rod or pin, and a helical spring disposed around the rod so as to determine, in a known manner, the elasticity of the slider and a consequent elastic movement of the temple with respect to the lug, the so-called "extra-opening" movement. This allows optimum conditions for putting on and wearing the spectacles.

Among elastic hinges that allow said "extra-opening", there are also those with a "double slider", in which the male hinging element is attached to the lug of the spectacles whereas the female hinging element comprises two elastic sliders provided with springs and inserted slidingly into and guided, independently from each other, in respective housings made in the box-like body associated with the temple.

It is also known that both the producer of spectacles and also the optician have to perform various types of adjustments on the spectacles. These include the personalization of the conditions of putting on and wearing the spectacles, and the adjustment of the pantoscopic angle, that is, the angle of inclination of the temple with respect to the front of the frame. This adjustment is obtained by means of operations of bending the temple with respect to the front and, above all, aligning the coupling surfaces between the front and the temple, obtained by torsional movements of the temple with respect to the front.

The adjustment operations cause stress and deformation that affect the elements of the hinge. Among the consequences of this there is the excessive widening of the fins of the female element of the hinge, excessive wear of the pivoting pin and excessive deformation of the elements that make up the extra-opening mechanism. This entails an increase in the play between the elements of the hinge in the final product, passing from a play in the range of 1 degree, before the adjustment operations and which is typical of the assembled product, to a play comprised between about 5 degrees and 6 degrees, after adjustment.

Elastic hinges are also known, applied to plastic frames, which allow to modify the inclination of the temple, so as to theoretically allow some of the above adjustment operations, but in practice, only the adjustment of the pantoscopic angle.

These known hinges, the so-called front hinges, consist of a hinging element, or male element, attached to the temple, and an articulation element substantially consisting of an anchoring part partly drowned in the front of the plastic frame, and a pivoting part, or female part, disposed outside the front and able to be pivoted to the male hinging element.

In particular, the pivoting part is provided with small hollows which define a region of predetermined yield of said pivoting part, to allow the selective adjustment of the pantoscopic angle of the spectacles.

In the field of spectacles there is an ever-growing demand for elastic hinges to have as little play as possible, and the front hinge described above does not solve the problem of residual play after the adjustment by the optician, both in the case of a plastic frame and also, especially, in the case of a metal frame. In particular, furthermore, the deformations are in any case discharged onto the elements of the elastic hinge, with the concrete risk of worsening the coupling in the zone with the function of sliding guide for the elastic slider in the housing cavity associated with the temple.

In particular, the workings inside the cavity which houses the elastic slider, such as holing, broaching, and boring, require very narrow tolerances and, in the case of excessive deformations, the coupling of the slider and the housing of the box-like body is compromised, with an inevitable increase in the play of the elastic mechanism.

A type of elastic hinge is also known, from the US patent US-A-4,448,502, in which a segment made of elastically deformable synthetic material allows to adjust the pantoscopic angle of the spectacles. However, this solution does not allow a correct and uniform torsional adjustment of the frame, and can also compromise the functionality of the elastic hinge.

Purpose of the present invention is therefore to achieve an elastic and adjustable hinge for spectacles that allows to perform all the necessary adjustments of the position of the temple with respect to the frame, absorbing the relative deformations in a predetermined zone of the male element of the hinge, without excessively increasing the play between the components of the elastic hinge and maintaining the efficiency of the mechanism that allows the extra-opening.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, an elastic and adjustable hinge for spectacles according to the present invention is able to hinge a temple to the front of the spectacles and comprises a first hinging element, or male element, able to be inserted into a second hinging element, or female element, and to be pivoted thereto by means of a single pivoting element and elastic means mounted on the first hinging element or on the second hinging element and able to render the movement of the temple elastic with respect to the frame of the spectacles.

According to a characteristic feature of the present invention, the hinge also comprises adjustment means able to adjust the position of the temple with respect to the position of the front of the spectacles. The adjustment means comprises at least a hollow, made substantially continuous on the whole external surface of the first hinging element, which is able to determine a predefined reduction in the cross section of the first hinging element.

The hollow determines a predefined reduction in the resistant section of the first hinging element, allowing to deform the hinge in a controlled manner.

The elastic and adjustable hinge according to the present invention allows to effect the necessary adjustments to the position of the temple with respect to the frame in a uniform manner, substantially in all directions. In particular, the solution according to the invention allows to effect correctly an adjustment of a torsional type, absorbing the relative deformations in a predetermined zone of the male element of the hinge, without excessively increasing the play between the components of the hinge and maintaining the efficiency of the mechanism that allows the elastic movement, that is, the extra-opening, of the temple with respect to the front.

With the hinge according to the present invention it is thus possible to allow a personalization of the conditions for putting on and wearing the spectacles, and to preserve the correct functioning.

According to a variant, the hollow has a substantially uniform depth.

According to an advantageous variant, the hinge according to the present invention is made of plastically deformable metal material, for example copper alloys, stainless steels or suchlike.

According to another variant, in which the first hinging element comprises, in a single piece, a hinging portion with which the pivoting element cooperates and a sliding portion with which the elastic means is associated, the continuous hollow is made in correspondence with a portion where the pivoting portion and the sliding portion are joined.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partial section of an elastic and adjustable hinge according to the present invention associated with a front and a temple of spectacles, in an inactive condition;
- fig. 2 is a partial section of the elastic and adjustable hinge in fig. 1, in a condition of extra-opening;
- fig. 3 is another section of the elastic and adjustable hinge in fig. 1;
- fig. 4 is a plane view of a hinging element of the elastic and adjustable hinge in fig. 1;
- fig. 5 is a lateral view of the hinging element in fig. 4;
- fig. 6 is a section from VI to VI of fig. 4;
- fig. 7 is a lateral view of the elastic and adjustable hinge in fig. 1 in an adjustment condition;
- fig. 8 is a front view of the elastic and adjustable hinge in fig. 1 in another adjustment condition;
- fig. 9 is a rear view of the elastic and adjustable hinge in fig. 8;
- fig. 10 is a perspective view of the elastic and adjustable hinge in fig. 8;
- fig. 11 is a plane view of a variant of the hinging element in fig. 4;
- fig. 12 is a lateral view of the variant in fig. 11;
- fig. 13 is a plane view of another variant of the element in fig. 4;
- fig. 14 is a lateral view of the variant in fig. 13;
- fig. 15 is a plane view of another variant of the element in fig. 4;
- fig. 16 is a perspective and partly sectioned view of another variant of the element in fig. 4;
- fig. 17 is a view of the variant in fig. 16 in separate parts;
- fig. 18 is a plane and partly sectioned view of the variant in fig. 16, associated with a front and a temple of spectacles, in an inactive condition;
- fig. 19 is a plane and partly sectioned view of the variant in fig. 16, associated with a front and a temple of spectacles, in a condition of extra-opening;
- fig. 20 is a lateral and partly sectioned view of a variant of the elastic and adjustable hinge in fig. 1;
- fig. 21 is a plane view of the variant in fig. 20;
- fig. 22 is a lateral view of a variant of the elastic and adjustable hinge in fig. 20;
- fig. 23 is a plane view of the variant in fig. 22; and
- fig. 24 is a perspective view of the variant in fig. 22.

### DETAILED DESCRIPTION OF A PREFERENTIAL FORM OF EMBODIMENT

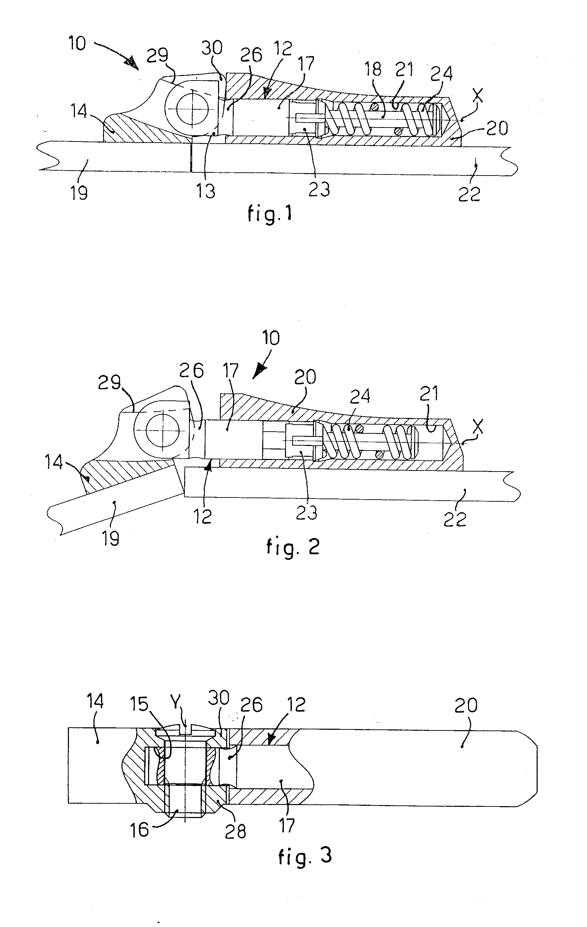

With reference to fig. 1, an elastic and adjustable hinge 10 according to the present invention comprises a male hinging element 12 able to be inserted in a mating female hinging element 14.

Moreover, the element 12 is able to be associated with a temple 22 of the spectacles, while the element 14 is able to be mounted on the relative front 19 or lug of the spectacles.

In a known manner, the male 12 and female 14 elements are pivoted to each other, with respect to a single pivoting axis Y, by means of a single screw 16 or an equivalent pivoting element. In this way the rotating connection between the temple 22 and the front 19 is achieved.

The element 12 constitutes the elastic slider of the hinge 10 and consists of a pivoting portion 13 able to be inserted into a seating 15 of the element 14 (figs. 1 and 3). The seating 15 is delimited by two suitable fins 28 and 30 separated by a predetermined distance. The element 12 also consists of a sliding portion 17 which is able to slide guided inside a housing seating, or axial cavity 21 of a box-like body 20. The box-like body 20 is attached, for example by means of welding, on the internal wall, in the normal use of the spectacles, of the temple 22. Alternatively, the box-like body 20 can be made directly in the body of the temple 22 or front of the spectacles.

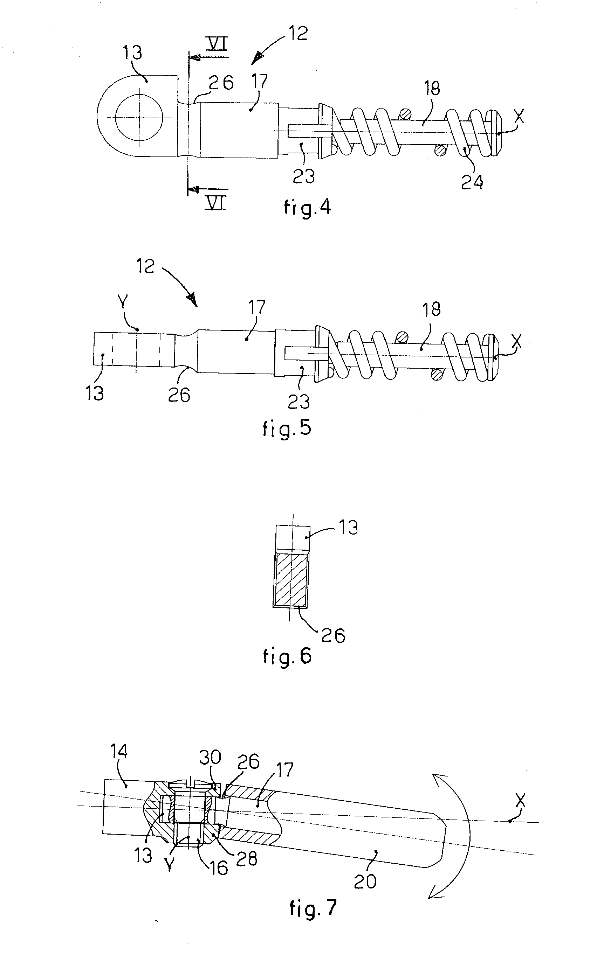

In particular, the sliding portion 17 has a thickness greater than said pivoting portion 13 (figs. 3 and 5) and, at one end, has a pin or rod 18 (figs. 1 and 4), having a relative longitudinal axis X. The pin 18 is able to be inserted into and guided, in sliding manner, in the housing 21 of the box-like body 20 (figs. 1 and 2).

A helical spring 24 (figs. 1 and 4) is disposed around the pin 18 and is maintained inside the housing 21 by means of a clamping element, in this case a bushing 23, in turn made solid with the box-like body 20.

The sliding portion 17 is able to cooperate, by means of the helical spring 24, with the box-like body 20, in particular with the internal surface of the relative housing 21, in order to determine, in a known manner, a movement of extra-opening with elastic return of the temple 22 with respect to the lug of the spectacles (figs. 1 and 2), and also, advantageously, to allow the temple 22 to rotate on itself and return elastically to position.

Furthermore, since the sliding portion 17 has a greater thickness than the portion 13, it is advantageous to make suitable notches 29 (figs. 1 and 2) on the hinging element 14, so that during the steps of maximum extension of the hinging element 12 from the box-like body 20, the sliding portion 17 does not abut on the fins 28 and 30 of the hinging element 14 (fig. 2).

According to a characteristic feature of the present invention, an adjustment hollow 26 is made on the hinging element 12 (figs. 1 to 7), defined by a continuous and annular groove made on the external surface, and disposed in a portion comprised between said pivoting portion 13 and the sliding portion 17.

The adjustment hollow 26 is able to cause a localized reduction, for example of a uniform depth, in the cross section of the element 12, that is, a reduction in the usable resistant section, which in turn causes a predetermined and preferential zone of plastic deformation, or yield, of the element 12.

By means of the plastic deformation of the material of which it is made, the hollow 26 allows to effect easily, and in a substantially uniform manner, all the adjustments of the temple 22 with respect to the front 19, particularly those deriving from torsion operations which, in known hinges, are more likely to damage the hinge 10, but without causing any damage to the functioning of the hinge.

The hollow 26 allows the uniform plastic deformation of the element 12, in particular the inclination of the sliding portion 17 and of the box-like body 20 with respect to the relative axis X (fig. 7), whereas the portion 13 remains aligned with the axis X. In practice, this inclination is obtained by bending the temple 22 manually with respect to the front 19.

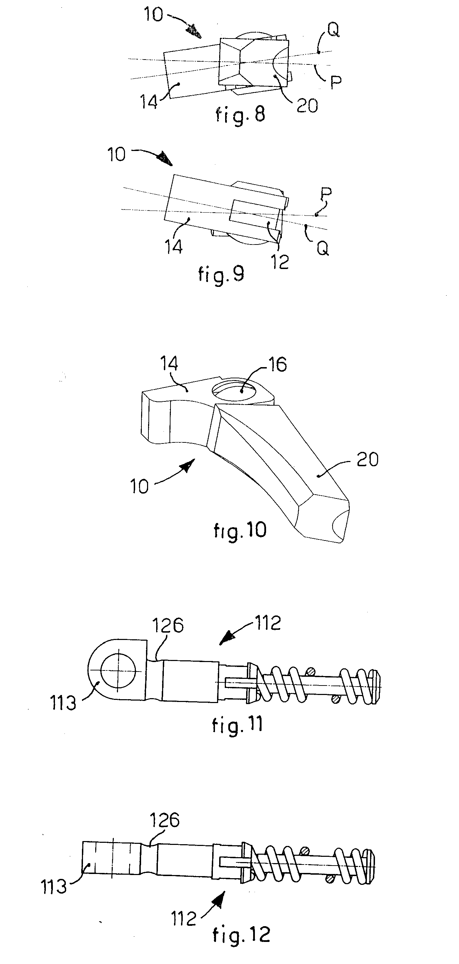

Figs. 8 to 10 show another adjustment operation, of the torsional type, between front 19 and temple 22, in which the temple 22 is rotated with respect to the front plane on which the front 19 of the spectacles lies, causing a desired deformation in correspondence with the hollow 26. This type of torsion is shown by the inclination of the element 14, mounted on the front, with respect to the box-like body 20, in turn attached to the temple 22. In particular, the reciprocal inclination can be seen between the plane Q on which the element 14 lies and the plane P, on which the longitudinal axis of the temple 22 lies, and which is normally perpendicular to the front plane of the spectacles. This type of torsional adjustment is associated with a potentially very harmful deformation for an elastic hinge which, however, thanks to the present invention, can be achieved without compromising the functionality of the hinge 10.

In the form of embodiment shown in figs. 1 to 7 the pivoting portion 13 is less thick than the sliding portion 17 and the adjustment hollow 26, made substantially continuous on the whole of the external surface, defines a substantially quadrangular cross section (fig. 6) and a curvilinear development that varies along the sliding portion 17 from point to point.

We shall now describe some variants of the present invention in which, in the relative drawings, the same reference numbers are used for equivalent parts.

One variant embodiment of the element 12, indicated for convenience by the reference number 112 in figs. 11 and 12, provides that the hollow 126 made on the external surface has a substantially continuous and annular development, that it is curvilinear and that the pivoting portion 113 has the same thickness as that of the sliding portion 17.

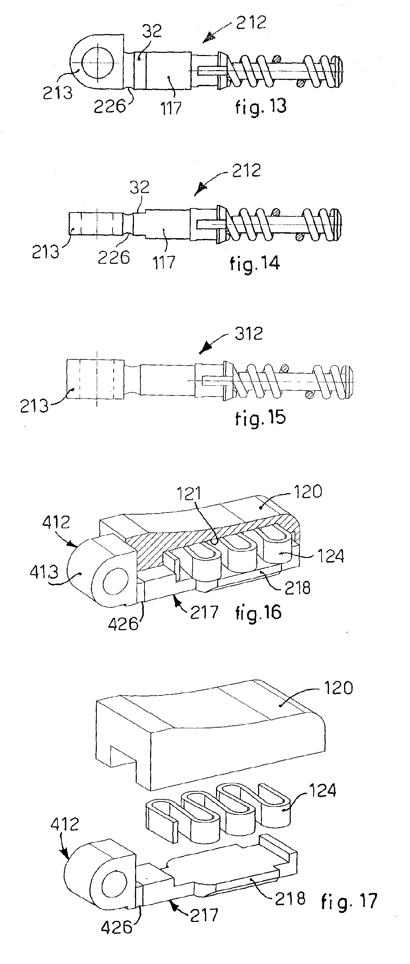

A variant of the element 112, indicated for convenience by the reference number 212 in figs. 13 and 14, provides that the pivoting portion 213 has a smaller cross section than that of the sliding portion 117 and that the latter has one end 32 with a reduced section, with a thickness equal to that of the portion 213, made step-wise and adjacent to the hollow 226, the latter being made substantially continuous and annular on the external surface.

Another variant of the element 112, indicated for convenience by the reference number 312 in fig. 15, provides that the pivoting portion 313 has a bigger cross section than that of the sliding portion 117.

The variants shown in figs. 11 to 15 have the advantage that they avoid having to make notches on the hinging element 14 previously shown.

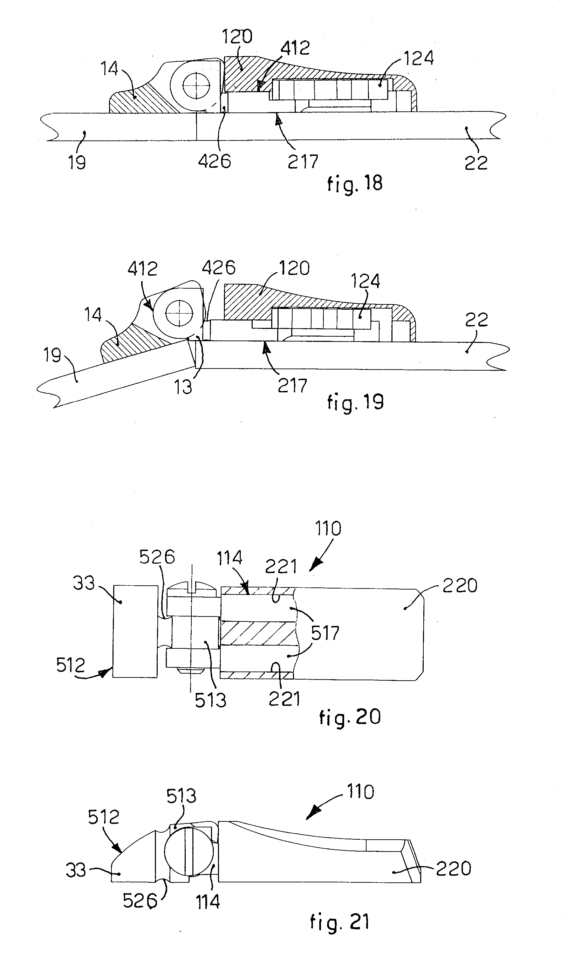

Another variant of the hinging element of the hinge 10 according to the invention, indicated for convenience by the reference number 412 in figs. 16 to 19, provides to make the elastic slider 412 consisting of a pivoting portion 413 and a sliding portion 217, and to insert it into a relative box-like body 120, suitably sized and associated with the temple 22 of the spectacles. In particular, the sliding portion 217 has at one end a sliding element 218 and cooperates with the housing 121 of the box-like body 120 by means of a zig zag spring 124 or, in an equivalent way, by means of two paired helical springs, so as to determine, in a known manner, the extra-opening of the temple 22 with respect to the front 19 of the spectacles, shown in figs. 18 and 19. In this case too, a relative adjustment hollow 426 is provided, made substantially continuous and annular on the external surface and with a quadrangular cross section and a curvilinear development and having the same functions as those of the hollows 26, 126, 226, 326 already described.

Another form of embodiment of the present invention is shown in figs. 20 and 21, where a "double slider" hinge 110 comprises a male hinging element 512, able to be mounted on the lug of the spectacles and pivoted to a female hinging element 114, able to be inserted partly into the relative box-like body 20 associated with the temple of the spectacles. The element 114 consists of two independent elastic sliders 517 which are able to be inserted into and to slide in guided manner in the relative housings 221 of the box-like body 220. In this form of embodiment, the element 512 is provided with a pivoting portion 513 with a smaller section than that of the body 33 of the element 512 and with an adjustment hollow 526, made substantially continuous and annular on the external surface of the body 33, with the same function as that of the hollows 26, 126, 226, 326 and 426 as shown above. The adjustment hollow 526 is defined by an annular groove which determines a reduced section with respect to the body of the element 512 and the portion 513.

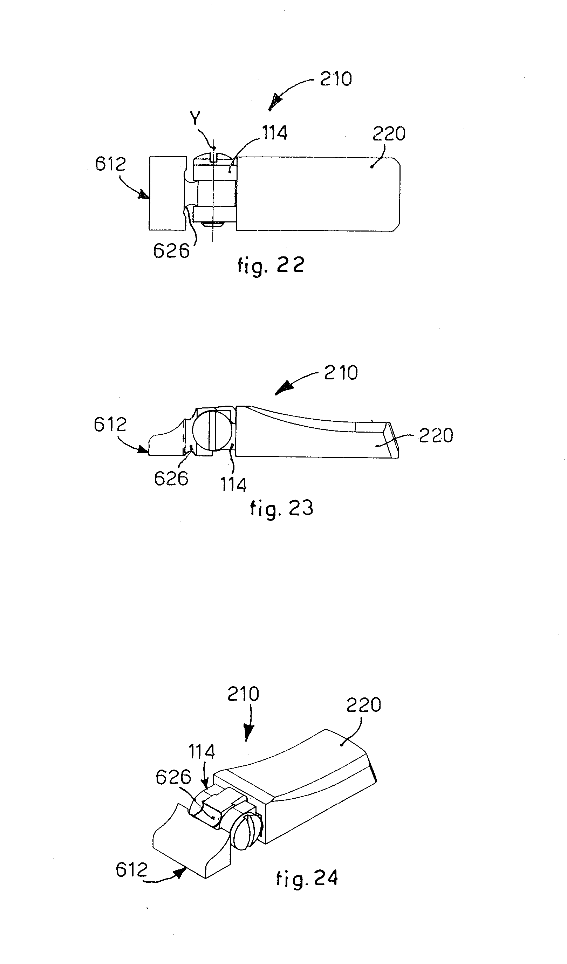

Figs. 22, 23 and 24 show a variant embodiment of the hinge 110, indicated for convenience by the reference number 210, where a hollow 626 is made on the hinging element 612 and is defined by a linear groove made substantially continuous and annular on the external surface, and having a section like an arc of a circle and which also extends inside the body of the element 612. This conformation of the hollow has the advantage that at least the two lateral segments can be made simply by holing.

Advantageously, at least the hinging element 12, 112, 212, 312, 412, 512, 612 on which the hollow 26, 126, 226, 326, 426, 526, 626 is made, preferably the hinging element 14, 114 too, is made of a material able to deform plastically, such as copper-based alloys, preferably alpacca, or stainless steels, preferably austenite or hardened by precipitation.

It is clear, however, that modifications and/or additions of parts may be made to the hinge 10, 110, 210 as described heretofore, without departing from the field and scope of the present invention.

It is also clear that, although the present invention has been described with reference to specific examples, a person of skill in the art shall certainly be able to achieve many other equivalent forms of elastic and adjustable hinge for spectacles, having the characteristics as set forth in the claims and hence all coming within the field of protection defined thereby.

## Claims

1. Elastic and adjustable hinge for spectacles able to hinge a temple (22) to the front (19) of said spectacles, comprising a first hinging element (12, 112, 212, 312, 412, 512, 612) able to be inserted in a second hinging element (14, 114) and to be pivoted thereto by means of a single pivoting element (16) and elastic means (24) mounted on said first hinging element (12, 112, 212, 312, 412, 512, 612) or on said second hinging element (14, 114) and able to render the movement of said temple (22) elastic with respect to the frame of said spectacles, **characterized in that** an adjustment means is provided to adjust the position of said temple (22) with respect to the position of said front (19), which comprises at least a hollow (26, 126, 226, 326, 426, 526, 626) made substantially continuous on the whole external surface of said first hinging element (12, 112, 212, 312, 412, 512, 612), which is able to determine a predefined reduction in the cross section of said first hinging element (12, 112, 212, 312, 412, 512, 612).

2. Hinge as in claim 1, **characterized in that** said hollow (26, 126, 226, 326, 426, 526, 626) has a substantially uniform depth.

3. Hinge as in claim 1 or 2, **characterized in that** said first hinging element (12, 112, 212, 312, 412, 512, 612) or said second hinging element (14, 114) comprises a sliding portion (17, 117, 217, 517) associated with said elastic means (24) and inserted slidingly in a relative axial cavity (21, 121, 221) of a box-like body (20, 120, 220) associated with said temple (22).

4. Hinge as in any claim hereinbefore, **characterized in that** said hollow (26, 126, 226, 326, 426, 526, 626) is disposed in substantial proximity with a pivoting portion (13, 113, 213, 313, 413, 513) of said first hinging element (12, 112, 212, 312, 412, 512, 612).

5. Hinge as in claim 3, **characterized in that** said hollow (26, 126, 226, 326, 426) is disposed between said sliding portion (17, 117, 217) and said pivoting portion (13, 113, 213, 313, 413).

6. Hinge as in claim 3, **characterized in that** said hollow (26, 126, 226, 326, 426) is disposed at least partly outside said box-like body (20, 120).

7. Hinge as in any claim from 3 to 6, **characterized in that** said hollow (26, 126, 226, 326, 426, 526, 626) defines a substantially quadrangular cross section of said sliding portion (17, 117, 217, 517).

8. Hinge as in any claim from 3 to 6, **characterized in that** said hollow (26, 126, 226, 326, 426, 526, 626) defines a substantially curvilinear cross section of said sliding portion (17, 117, 217, 517).

9. Hinge as in any claim hereinbefore, **characterized in that** said first hinging element (12, 112, 212, 312, 412, 512, 612) is made of a plastically deformable metal material.

10. Hinge as in claim 3, **characterized in that** said second hinging element (14, 114) is provided with fins (28, 30) parallel to each other and separated by a predetermined distance so as to allow said pivoting portion (13, 113, 213, 313, 413, 513) to be inserted, wherein said fins (28, 30) are able to be positioned partly above said hollow (26, 126, 226, 326, 426, 526, 626).

11. Hinge as in claim 1, **characterized in that** said second hinging element (14) comprises at least a portion (29) with a reduced section which functions as a notch.

12. Hinge as in claim 2, **characterized in that** said second hinging element (114) comprises two independent sliding portions (517).
